# EUROPÄISCHE PATENTANMELDUNG

(11) **EP 0 974 475 A1**
(43) Veröffentlichungstag der Anmeldung: **26.01.2000**
(21) Anmeldenummer: 99110819.2
(22) Anmeldetag: 05.06.1999
(51) Int. Cl.: B60G 3/14, B60G 7/00

(54) **Einzelradaufhängung in Schräg-, Längs- oder Verbundlenkerbauweise mit einem abgekoppelten Radträger**

(30) Priorität: 18.07.1998 DE 19832384
(71) Anmelder: DaimlerChrysler AG, 70567 Stuttgart (DE)
(72) Erfinder: Süss, Johann, 71404 Korb (DE)

(57) **Zusammenfassung**

Die Erfindung betrifft eine Einzelradaufhängung in Schräglenker- oder Verbundlenkerbauweise mit einem radführenden an mindestens zwei Stellen am Fahrzeugaufbau gelagerten Schräg- oder Verbundlenker, der einen annähernd um eine vertikale Achse schwenkbaren Radträger aufweist, wobei die Schwenkachse des Radträgers in Bezug auf die Fahrtrichtung hinter der Radachse liegt, während der Radträger vor der Radachse in Fahrzeugquerrichtung elastisch am Schräg- oder Verbundlenker abgestützt ist. Zwischen dem Radträger und dem Schräglenker oder einem Verbundlenkerarm ist im Bereich hinter der Radachse ein Pendellenker (31) mit annähernd vertikalen Schwenkachsen (14,24) angeordnet. Dabei liegt in Fahrzeugquerrichtung gesehen die radträgerseitige Schwenkachse (24) des Pendellenkers in der Nähe der Radmittenebene (10), während die schräglenkerseitige Schwenkachse (14) des Pendellenkers im Bereich des radinneren Felgenhorns liegt.

Mit der Erfindung wird eine Einzelradaufhängung geschaffen, die bei hohem Längsfederkomfort seitenkraftübersteuernd wirkt.

## Beschreibung

Die Erfindung betrifft eine Einzelradaufhängung in Schräg-, Längs- oder Verbundlenkerbauweise mit einem radführenden an mindestens zwei Stellen am Fahrzeugaufbau gelagerten Schräg-, Längs- oder Verbundlenker, der einen annähernd um eine vertikale Achse schwenkbaren Radträger aufweist, wobei die Schwenkachse des Radträgers in Bezug auf die Fahrtrichtung hinter der Radachse liegt, während der Radträger vor der Radachse in Fahrzeugquerrichtung elastisch am Schräg-, Längs- oder Verbundlenker abgestützt ist.

Eine derartige Einzelradaufhängung ist aus der DE-OS 21 58 931 bekannt. Der Radträger verändert bei einer Kurvenfahrt seine Lage relativ zum Schräglenker. Am kurvenäußeren Rad schwenkt der Radträger gegen den Schräglenker, wobei das Rad in Vorspur geht. Durch die relativ starre Lagerung zwischen dem Schräglenker und dem Radträger muß die Schräglenkerlagerung gegenüber dem Fahrzeugaufbau elastisch gelagert werden. Die Nachgiebigkeit der Schräglenkerlagerung verringert bei der Kurvenfahrt die positive Vorspuränderung aufgrund der besonderen Radträgerlagerung.

Der Erfindung liegt das Problem zugrunde, eine Einzelradaufhängung in schräg- oder Verbundlenkerbauweise zu schaffen, die bei hohem Längsfederkomfort seitenkraftübersteuernd wirkt.

Das Problem wird mit den Merkmalen des Hauptanspruchs gelöst. Hierzu ist zwischen dem Radträger und dem Schräglenker oder einem Verbundlenkerarm im Bereich hinter der Radachse ein Pendellenker mit annähernd vertikalen Schwenkachsen angeordnet. Dabei liegt in Fahrzeugquerrichtung gesehen die radträgerseitige Schwenkachse des Pendellenkers in der Nähe der Radmittenebene, während die schräglenkerseitige Schwenkachse des Pendellenkers im Bereich des radinneren Felgenhorns liegt.

Als Nähe der Radmittenebene wird ein Felgenraumbereich definiert, der von der Radmittenebene halbiert wird und eine Tiefe der halben Felgenbreite hat. Als Bereich des radinneren Felgenhorns wird eine Zone angegeben, die sich von der Felgenhornebene des inneren Felgenhorns jeweils um ein Viertel der Felgenbreite in den Felgenraum hinein und aus dem Felgenraum heraus reicht.

Der Radträcer ist am Schräglenker nicht starr angeordnet, sondern zum einen mittels eines annähernd quer zur Fahrtrichtung ausgerichteten Pendellenkers in der Bauweise eines Vierpunktlenkers gelagert und zum anderen in einem Schiebegelenk mit einer elastischen Zwischenlage. Der getriebetechnisch vom Schräglenker entkoppelte Radträger bildet zusammen mit dem Pendellenker eine Art Schubkurbel, bei der der Pendellenker die Kurbel ist, während der Radträger das Schiebeglied darstellt.

Bei allen Beschleunigungsvorgängen pendelt die Kurbel, also der Pendellenker, um einige Winkelgrade um eine Neutrallage. Die in Fahrzeuglängsrichtung relativ weiche Radaufhängung hat einen hohen Längsfederkomfort. Bei einer durch Bremsen bedingten Pendelbewegung geht das Rad in eine stabilisierende Vorspur. Bei der Kurvenfahrt wirkt die Einzelradaufhängung seitenkraftuntersteuernd, da das Rad wegen der elastischen Nachgiebigkeit des Schiebegelenks in die Kurve hineinlenkt.

Die besondere Art der Lagerung des Radträgers am radführenden Schräglenker kann auch bei anderen Achstypen verwendet werden, beispielsweise bei einer Verbundlenkerachse. Die Lagerung des Radträgers übernimmt bei diesem Achstyp der jeweilige Längslenker.

Weitere Einzelheiten der Erfindung ergeben sich aus den nicht oder nur teilweise zitierten Unteransprüchen. Anhand der nachfolgenden Beschreibung einer schematisch dargestellten Ausführungsform wird die Erfindung näher erläutert:
- Figur 1:: Einzelradaufhängung in der Rückansicht;
- Figur 2:: wie Figur 1, jedoch Draufsicht.

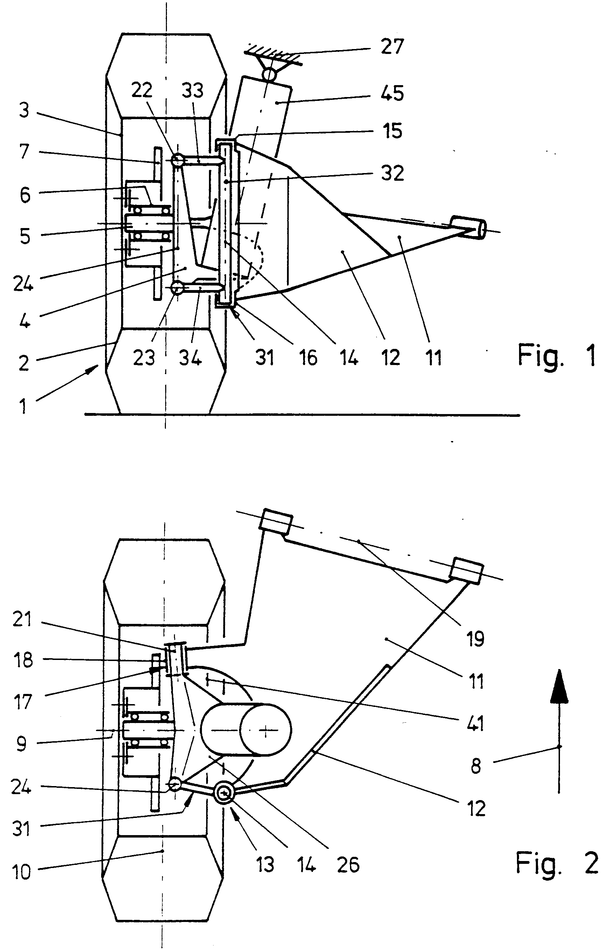

Die Figuren 1 und 2 zeigen eine Einzelradaufhängung in Schräglenkerbauweise. Ein Schräglenker (11) trägt über einen gelenkig gelagerten Radträger (4) ein Rad (1-3). Das Rad sitzt bekannterweise über eine Radnabe (6) wälzgelagert auf einem am Radträger (4) angeordneten Achszapfen (5). An der Radnabe (6) ist hier u.a. eine Bremsscheibe (7) und eine den Reifen (2) tragende Feige (3) montiert.

Der um eine Schwenkachse (19) pendelnde Schräglenker (11) endet im Bereich des Rades (1) in einem gabelartigen Schwenklager (13) und in einem elastokinematischen Schiebegelenk (17). Das Schwenklager (13), das eine annähernd vertikale Schwenkachse (14) hat, umfaßt schräglenkerseitig beispielsweise eine obere und eine untere Lagerbüchse (15) und (16). Zwischen den Lagerbüchsen (15) und (16) ist ein den Radträger (4) abstützender Pendellenker (31) gelagert. Die Lagerbüchsen (15, 16) sind im Ausführungsbeispiel an einem am Schräglenker (11) angeformten Versteifungsblech (12) befestigt.

Das in Figur 2 dargestellte Schiebegelenk (17), das ungefähr in der Höhe der Radmitte liegt, ist eine Buchse (18), die einen am Radträger (4) angeordneten Schiebezapfen (21) umfaßt. Durch die Höhenlage des Schiebegelenks (17) kann der seitenkraftneutrale Punkt beeinflußt werden. Ein höher angeordnetes Schiebegelenk (17) bewirkt einen weiter hinten liegenden seitenkraftneutralen Punkt.

Zwischen der Buchse (18) und dem Schiebezapfen (21) befindet sich ein beispielsweise einvulkanisiertes, elastisches Bauteil. Der sich durch die Materialeigenschaften des elastischen Bauteils und durch die Gestaltung des Schiebegelenks (17) ergebende Verschiebeweg in Buchsenlängsrichtung ist gegebenenfalls durch Anschläge begrenzt.

Die Mittellinie des Schiebegelenks (17) des hier dargestellten linken Kraftfahrzeughinterrades (1) verläuft in Fahrtrichtung (8) gesehen nach links außen. Sie schließt mit der Fahrzeuglängsachse einen Winkel ein, der bis zu 15° betragen kann.

Der Radträger (4) hat in Fahrtrichtung (8) gesehen hinter der Radmitte zwei Gelenke (22, 23), über die er am Pendellenker (31) gelagert ist. Die Gelenke (22, 23) liegen auf einer Schwenkachse (24), die beispielsweise parallel zur Schwenkachse (14) ausgerichtet ist.

Der als Vierpunktlenker ausgebildete Pendellenker (31) besteht im Ausführungsbeispiel aus einem drehsteifen Lenkerbolzen (32) und zwei davon senkrecht abstehenden Kragarmen (33, 34). Beide Kragarme (33, 34) verlaufen beispielsweise parallel zueinander und bilden zusammen mit dem Lenkerbolzen (32) einen formsteifen Verbund. Sie haben - zwischen den Schwenkachsen (14) und (24) gemessen - beispielsweise eine Länge, die der halben Felgenmaulweite entspricht. Zwischen den Kragarmen (33, 34) kann der Pendellenker (31) ausgesteift sein.

Der Pendellenker (31) ist so zwischen dem Schräglenker (11) und dem Radträger (4) angeordnet, daß in Fahrtrichtung gesehen, die Schwenkachse (24) vor der Schwenkachse (14) liegt. Die Schwenkachse (24) liegt im näheren Bereich der Radmittenebene (10), während die Schwenkachse (14) in der Zone des inneren Felgenhorns (41) liegt, vgl. Figur 1. Die Bereichsbreite für die Lage der Schwenkachse (24) und die Zonenbreite für die Position der Schwenkachse (14) können jeweils im Bereich von mehreren Zentimetern liegen.

Bei dem Betrieb eines Fahrzeuges mit einer derartigen Radaufhängung kann sich der Radträger (4) mit dem Rad (1) je nach Belastung - annähernd in Fahrzeuglängsrichtung - mit unterschiedlichen Amplituden vor- und zurückbewegen. Hierbei pendelt der Pendellenker (31) um die Schwenkachse (14) und der Radträger (4) bewegt sich über den Zapfen (21) relativ zur Buchse (18). Die Bewegung des abgekoppelten Radträgers (4) wird gedämpft durch eine elastische Einlage zwischen den Bauteilen (18) und (21). Der durch die Abkopplung erzeugte Längstederkomfort ist so präzise auslegbar, daß ein Fahrschemel zur Fahrkomfortverbesserung nicht mehr zwingend notwendig ist. Auch können die auf der Schwenkachse (19) liegenden Schwenkgelenke des Schräglenkers (11) starr ausgelegt werden, was eine präzise Lenkerführung ermöglicht.

Werden der Pendellenker (31) und das Schiebegelenk (17) - wie in den Figuren abgebildet - angestellt, stellt sich beim Bremsen des Fahrzeugs am Rad (1) eine stabilisierende Vorspur ein. Das Rad (1) bewegt sich durch das Bremsen relativ zum Schräglenker (11) entgegen der Fahrtrichtung (8). Der gemäß Figur 2 im Gegenuhrzeigersinn schwenkende Pendellenker (31) drückt das Rad (1) hinter der Radmittellinie (9) nach außen, während das Schiebegelenk (17) das Rad (1) vor der Radmittellinie (9) nach innen führt.

Da das Schiebegelenk (17) auch in Fahrzeugquerrichtung elastisch nachgeben kann, verbessert die Konstruktion das Fahrverhalten bei Kurvenfahrt ebenfalls. Ist das in Figur 2 dargestellte Rad (1) ein kurvenäußeres Hinterrad, so bewirkt eine das Rad (1) belastende Seitenkraft ein Schwenken das Radträgers (4) um die Schwenkachse (14) im Uhrzeigersinn. Der Zapfen (21) wird im Rahmen der elastischen Nachgiebigkeit der in Schiebegelenk (17) integrierten gummielastischen Einlage in Richtung auf die Fahrzeugmitte gedrückt. Nach der Kurvenfahrt zentriert sich der Zapfen (21) automatisch in der Buchse (18).

Die Gelenke des Pendellenkers (31) werden starr ausgeführt, so daß sich eine genaue Radführung ergibt und das Rad (1) beim Bremsen seinen Nachlaufwinkel nicht oder nur geringfügig ändert.

Nach den Figuren 1 und 2 stützt sich der Radträger (4) beispielsweise über eine Schraubenfeder (45) direkt am Fahrzeugaufbau (27) ab. Die Schraubenfeder (45) sitzt auf einem am Radträger (4) angeordneten Federkragarm (26). Die schräg in den Felgenraum hineinragende Schraubenfeder (45) benötigt bei dieser Konstruktion wenig Bauraum im Radkasten. Durch ihre Schrägstellung drängt sie das Rad (1) beim Einfedern nach außen, was u.a. zumindest eine geringe Sturzverringerung beim Einfedern zur Folge hat.

Ferner ist die Belastung durch die Radaufstandskraft in den Gelenken (22, 23), den Lagerbüchsen (15, 16) und den Lagern des Schräglenkers (11) in vertikaler Richtung geringer, da die Radaufstandskraft direkt vom abgekoppelten Radträger (4) über die Schraubenfeder (45) in den Fahrzeugaufbau (27) eingeleitet wird. Lediglich das Moment durch den Versatz aus der Radmittenebene (10) zur Federmitte geht über die Gelenke (22, 23), die Lagerbüchsen (15, 16) und die Lager des Schräglenkers (11)

Selbstverständlich kann die Schraubenfeder (45) oder dergleichen auch wie üblich am Schräglenker (11) abgestützt sein.

Die erfindungsgemäße Einzelradaufhängung kann auch in angetriebenen Achsen verwendet werden.

### Bezugszeichenliste

- 1: Rad
- 2: Reifen
- 3: Felge
- 4: Radträger
- 5: Achszapfen
- 6: Radnabe
- 7: Bremsscheibe
- 8: Fahrtrichtung
- 9: Radachse, Radmittellinie
- 10: Radmittenebene
- 11: Schräglenker
- 12: Versteifungsblech
- 13: Schwenklager, gabelartig
- 14: Schwenkachse von (31), schräglenkerseitig
- 15: Lagerbüchse, oben
- 16: Lagerbüchse, unten
- 17: Schiebegelenk
- 18: Buchse
- 19: Schwenkachse von (11)
- 21: Schiebezapfen
- 22, 23: Gelenke
- 24: Schwenkachse von (31), radträgerseitig
- 26: Federkragarm
- 27: Fahrzeugaufbau
- 31: Pendellenker, Vierpunktlenker
- 32: Lenkerbolzen
- 33, 34: Kragarme
- 41: Felgenhorn, inneres
- 45: Schraubenfeder

## Patentansprüche

1. Einzelradaufhängung in Schräg-, Längs- oder Verbundlenkerbauweise mit einem radführenden an mindestens zwei Stellen am Fahrzeugaufbau gelagerten Schräg-, Längs- oder Verbundlenker, der einen annähernd um eine vertikale Achse schwenkbaren Radträger aufweist, wobei die Schwenkachse des Radträgers in Bezug auf die Fahrtrichtung hinter der Radachse liegt, während der Radträger vor der Radachse in Fahrzeugquerrichtung elastisch am Schräg-, Längs- oder Verbundlenker abgestützt ist, dadurch gekennzeichnet,
daß zwischen dem Radträger (4) und dem Schräglenker (11) oder einem Verbundlenkerarm im Bereich hinter der Radachse (9) ein Pendellenker (31) mit annähernd vertikalen Schwenkachsen (14, 24) angeordnet ist, wobei in Fahrzeugquerrichtung gesehen die radträgerseitige Schwenkachse (24) in der Nähe der Radmittenebene (10) liegt, während die schräglenkerseitige Schwenkachse (14) im Bereich des radinneren Felgenhorns (41) liegt.

2. Einzelradaufhängung gemäß Anspruch 1, dadurch gekennzeichnet, daß der jeweilige Pendellenker (31) in Neutrallage um einen Winkel bis zu 15° schräg gegen die Fahrzeugquerrichtung angestellt ist, wobei in Fahrtrichtung gesehen die radträgerseitige Schwenkachse (24) vor der schräglenkerseitigen Schwenkachse (14) liegt.

3. Einzelradaufhängung gemäß Anspruch 1, dadurch gekennzeichnet, daß das Gelenk (17) ein Schiebegelenk ist, dessen am Schräglenker (11) befestigte Buchse (18) gegenüber dem am Radträger (4) angeordneten Zapfen (21) in Schieberichtung und quer dazu elastisch gelagert ist.

4. Einzelradaufhängung gemäß Anspruch 1, dadurch gekennzeichnet, daß die Buchse (18) um einen Winkel bis zu 15° schräg gegen die Fahrzeuglängsrichtung angestellt ist, wobei in Fahrtrichtung gesehen das vordere Ende des Zapfens (21) in bezug auf die Fahrzeugmitte weiter außen liegt als der hintere Zapfenbereich.

5. Einzelradaufhängung gemäß Anspruch 1, dadurch gekennzeichnet, daß das die vier Gelenke (15, 16, 32) und (22, 23) des Pendellenkers (31) steif ausgebildet sind.

6. Einzelradaufhängung gemäß Anspruch 1, dadurch gekennzeichnet, daß das die Radaufhängung gegen den Fahrzeugaufbau (27) abstützende Federelement (45) am Radträger (4) gelagert ist.

7. Einzelradaufhängung gemäß Anspruch 1, dadurch gekennzeichnet, daß der Schräglenker (11) direkt am Fahrzeugaufbau gelagert ist.
